(19) Europäisches Patentamt
European Patent Office
Office européen des brevets

(11) **EP 2 927 465 B1**

(12) **EUROPEAN PATENT SPECIFICATION**

(45) Date of publication and mention
of the grant of the patent:
**10.03.2021 Bulletin 2021/10**

(51) Int Cl.:
*F02D 41/18* (2006.01)     *G01F 1/34* (2006.01)
*G01F 1/66* (2006.01)     *G01F 1/72* (2006.01)
*G01F 1/76* (2006.01)     *F02D 41/28* (2006.01)

(21) Application number: **14290092.7**

(22) Date of filing: **02.04.2014**

(54) **METHOD FOR DETERMINING THE INSTANTANEOUS MASS FLOW RATE OF A GAS, CORRESPONDING DEVICE AND COMPUTER PROGRAM**

VERFAHREN ZUR BESTIMMUNG DER MOMENTANEN MASSENDURCHFLUSSRATE EINES GASES, ZUGEHÖRIGE VORRICHTUNG UND COMPUTERPROGRAMM

PROCÉDÉ POUR DÉTERMINER LE DÉBIT MASSIQUE MOMENTANÉ D'UN GAZ, DISPOSITIF ET PROGRAMME INFORMATIQUE CORRESPONDANTS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**07.10.2015 Bulletin 2015/41**

(73) Proprietor: **MANN+HUMMEL GmbH
71636 Ludwigsburg (DE)**

(72) Inventors:
• **Mezher, Haitham
44000 Nantes (FR)**
• **Raimbault, Vincent
53000 Laval (FR)**
• **Migaud, Jérôme
35500 Vitré (FR)**
• **Chalet, David
44240 La Chapelle-sur-Erdre (FR)**
• **Chesse, Pascal
44700 Orvault (FR)**

(74) Representative: **Mann + Hummel Intellectual Property
Mann + Hummel
International GmbH & Co. KG
Schwieberdinger Straße 126
71636 Ludwigsburg (DE)**

(56) References cited:
WO-A1-2006/133963     WO-A1-2013/002656
DE-A1- 10 125 166     DE-A1-102005 007 057
DE-A1-102009 027 010     DE-B3-102004 010 903
US-A1- 2012 101 745

## Description

## TECHNICAL FIELD

The present invention relates to a method for determining the instantaneous mass flow rate of a gas, such as air, in an intake air channel of an internal combustion engine of a motor vehicle.

The invention also relates to an apparatus, and a computer program, arranged to conduct the method of the invention.

It notably finds application, but is not limited thereto, in the automotive industry.

More particularly, it advantageously finds application in the control and regulation of an internal combustion engine of a motor vehicle.

## BACKGROUND OF THE INVENTION

In an internal combustion engine, air mass flow rate can be determined by using measurement devices, the measured air mass flow rate being used, for instance, by the engine control unit (ECU) to balance and deliver the correct fuel mass to the engine.

The mass flow rate is represented as the ratio of a volume of air flowing through a predetermined sectional area of an air flow channel, i.e. a pipe, with respect to time.

An example of such a measurement device is the hot-wire anemometer that uses a Wheatstone bridge to measure the mass flow rate. The resistance of the hot-wire varies according to the amount of air passing through the pipe, and this change of resistance is interpreted as a voltage and converted to mass flow information.

Such a device is often used to give mean value information or an information once every engine cycle for example.

However, the significant pulsations of the gas mass which occur in the intake channel are not taken into account in the measurement signal of the mass flow rate and pressure.

Also, this device is not designed to measure instantaneous (i.e. real time) values of the mass flow rate and often suffers from fragility due to the fact that the hot-wire is very thin and can easily break when exposed to the pulsating flow of an engine.

Finally, such a device requires calibration each time it is to be used and, due to the fact that it is intrusive, disturbs the air intake flow and thus varies the air intake conditions.

From DE 102005007057 A1 a method is known involving determining characteristic values for a dynamic behavior of a parameter of fluid flow, where the parameter changes with varying load conditions, during operation of a motor vehicle. An average value of the characteristics values is determined over a characteristic time period, during an operation of an internal combustion engine. A distortion factor is determined to display the behavior of the parameter.

Application PCT/EP2009/053380 published on Oct. 1, 2009 under reference WO 2009/118290 describes a device for real-time measurement of the instantaneous flow rate of a fluid in a conduit

WO 2013/002656 A1 discloses an alternative method for determining a flow rate flowing in a pipe and discloses all the preamble of the independent claims 1 and 7.

WO 2006/133963 A1 discloses also an alternative method for determining a flow rate flowing in a pipe and discloses also all the preamble of the independent claims 1 and 7.

The device comprises a fluid flow member provided with at least two wall pressure sensors, means to measure pressure difference coupled with the two pressure sensors, and programmed computing means to compute the flow rate in real-time by solving a nonlinear, ordinary differential equation which relates instant flow rate to pressure difference. The flow member comprises a filter positioned between the two pressure taps to increase pressure loss or difference between the two pressure taps.

A disadvantage of such a solution is that it uses a filter in the flow path that disrupts the fluid flow to varying degrees.

A further disadvantage is that the device relies on time domain analysis, meaning that it uses mean values of the measurement to solve differential equations. In order to do so, these equations are often simplified with a wide number of assumptions. Thus, the computed flow rate is rather inaccurate.

Also and more importantly, time domain analysis for mass flow measurement is related to pressure difference measurements between two distinct points.

The equation linking pressure difference to the mass flow is widely known.

However, it assumes a steady mass flow and a constant or known air density.

These assumptions meet their limitations on an engine's intake where the temperature fluctuates and varies from one measurement point to another and where the air density is far from being constant or known, the latter being highly compressible and unsteady in nature.

Another way to measure air velocity is by using acoustic linear analytical transfer matrices.

However, such transfer matrices remain valid when the pressure and velocity amplitudes remain very small compared to the mean values. This is not strictly the case in an engine's intake.

Also, when deriving these analytical expressions of transfer matrices, air density is supposed to change or fluctuate very little and is often considered to be constant when calculating mass flow. This is clearly not the case in an engine where the cylinders breath in fresh air.

## SUMMARY OF THE INVENTION

The purpose of the present invention is to remedy these drawbacks by proposing a method for determining the instantaneous mass flow of a gas according to claim 1.

The proposed mass flow measurement method is dedicated to steady and unsteady mass flow conditions.

It may be used for instance to measure in real-time the unsteady mass flow in the air intake channel of an internal combustion engine, in which it is well-known that the direction of air mass flow varies.

The method of the invention provides a real-time determination of the air mass which is more accurate than the prior art techniques, and requires less computing resources.

To do so, the method implements a frequency-based approach and thus does not solve a differential equation model in the time domain as in the prior art.

A model linking two pressure measurements at two points of an intake channel to instantaneous mass flow at each of these points is identified in the frequency domain, experimentally or by a simulation technique.

It links pressure and mass flow directly and implicitly takes into account air density fluctuations, temperature fluctuations effects and effects of pulsating flow.

Instead of measuring a pressure difference as in the prior art techniques, the dynamic or unsteady pressure component (thus, not the mean value) is used to determine the dynamic mass flow component.

The calculations are carried out in the frequency domain then brought back to the time domain to be viewed.

According to the invention, said model is a transfer matrix.

The method of the invention implements a model description of the pulsation phenomena of the air mass flow and a transfer matrix in the frequency domain.

It bridges the gap between the limitation of the frequency domain acoustic theory and the time domain analysis.

The model takes the form of an algebraic transfer matrix similar in its writing to acoustic matrices.

According to another aspect of the invention, the step of obtaining the frequency spectrum of the mass flow at each of said measurement points consists in solving a frequency-domain linear equation determined from said model.

The relationship between pressure and mass flow is a frequency domain equation.

Once the transfer matrix is known, it can be used to determine the mass flow rate anywhere in the intake line, and in any engine configuration.

According to another aspect of the invention, said transfer matrix is derived experimentally by measuring pressure response inside a given conduit after a mass flow excitation.

In one possible embodiment, the transfer matrix is identified and calibrated on a dynamic flow bench.

The particular excitation of the bench enables pressure and mass flow waves to have the same order of magnitudes to those encountered in an engine.

There is no simplification of the energy equation and linear theory of one-dimensional flow is applied without the compromise of small perturbations with respect to the mean flow.

According to another aspect of the invention, such a method further comprises the steps of developing an engine control command as a function of the computed time-domain signal of the mass flow rate at any measurement point and controlling engine operation in accordance with the developed control command.

According to a particularly advantageous feature of the invention, the frequency spectrum of each of the measured pressure signals is obtained using a Fast Fourier Transform.

According to a further feature of the invention, the time-domain signal of the mass flow rate at any measurement point is obtained using an inverse Fast Fourier Transform.

The invention also relates to a device for determining the instantaneous mass flow of a gas according to claim 7.

The air mass flow estimator of the invention is accurate and requires no tuning or calibration.

It comprises signal processing means which process time domain information of the two pressure measurements by accessing their respective frequency spectrum, and means for calculating (by solving frequency domain linear equations) the instantaneous mass flow using a calibration matrix obtained in advance relating the frequency spectrum of the latter to that of the measured pressures. The instantaneous mass flow is obtained by transposing the frequency spectrum of the mass flow (i.e. the representation of the mass flow signal in the frequency domain) to the time domain.

According to another aspect of the invention, said device comprises means for developing an engine control command as a function of the computed time-domain signal of the mass flow rate at any measurement point and means for controlling engine operation in accordance with the developed control command.

According to another aspect of the invention, the means for measuring the time-domain signals of the gas pressure at said measurement points comprises two pressure sensors flush-mounted within the conduit

The mass flow measurement method of the invention is non intrusive, i.e. there is no change in section between the two pressure sensors.

In other words, there is no need to perturb the flow to the engine by using a device which modifies the section of the flow channel.

The invention also relates to a computer program recorded on a computer-readable medium and capable of being run by a processor, the program including program code instructions for implementing the method of the invention in the device of the invention.

## BRIEF DESCRIPTION OF THE DRAWINGS

The features of the method, device and computer program which are the subject of the invention are described in greater detail by referring to the attached non limiting drawings in which:

Figure 1 is a schematic illustration of a device according to the present invention which is arranged in an air intake channel of an internal combustion engine of a motor vehicle ;

Figure 2 is a schematic illustration of an experimental tool, called dynamic flow bench, which is used to obtain the transfer function matrix used in the method of the present invention ;

Figure 3 is flow diagram detailing the steps of the method according to an embodiment of the present invention ;

Figure 4 is a graphic showing the dynamic mass flow rate $qm_2$ calculated according to the method of the present invention, and by using a computerised simulation tool.

## DETAILED DESCRIPTION

A detailed description of an exemplary embodiment of the invention follows with reference to the figures provided.

The operation of a typical combustion engine intake system of a motor vehicle is well known.

The intake manifold comprises a main intake duct referred to as a "plenum" and a plurality of runners or conduits that distribute airflow from the plenum to the intake ports of each cylinder of the engine. The intake port of each cylinder comprises at least one intake valve and a fuel injector allowing when the intake valve is opened an air/fuel mixture to be introduced into the corresponding combustion chamber of the engine.

The intake valve shuts during the compression phase of the air/fuel mixture in the combustion chamber where it is combusted to drive pistons producing drive torque.

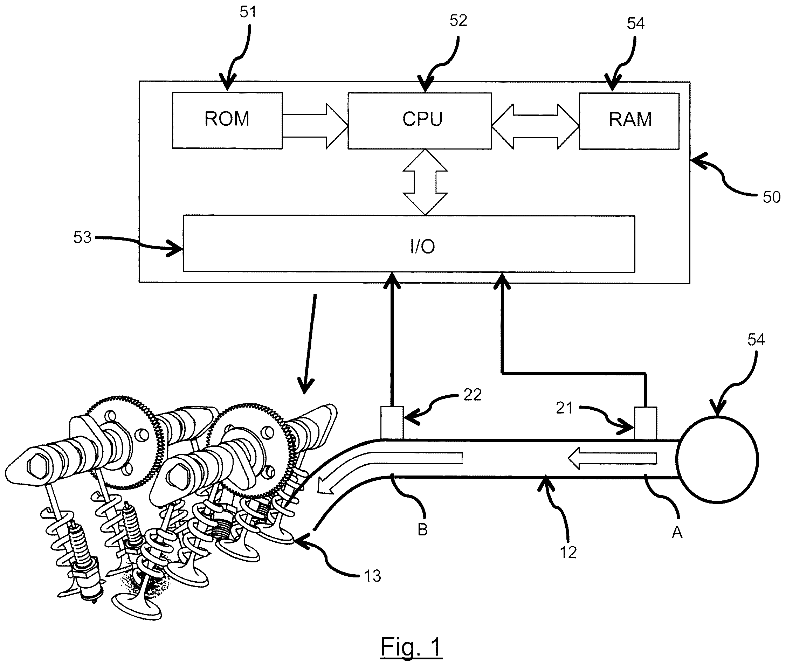

Figure 1 shows the main intake duct or plenum 11 of the intake manifold from which open out a series of intake runners which are each associated with one of the cylinders of the engine. For reasons of clarity, only one conduit 12 and the intake valves of the cylinder heads are shown, in particular the intake valve 13 of conduit 12.

The rapid motion (i.e. opening and closing) of the intake valve 13 are the source of pressure and mass flow variations in the conduit 12 which is of constant diameter.

The engine performance (power and torque for instance), fuel consumption and emission levels are highly dependent on wave action created by the motion of the valves within the conduits.

The method of the invention aims at measuring mass flow variations/dynamics in order to improve engine torque response, fuel consumption and overall volumetric efficiency.

To do so, in summary, a relationship is established between the pressure and mass flow at two adequately distant points, this relationship being a frequency domain equation derived from a transfer matrix. Once the transfer matrix is known, mass flow may be derived.

In accordance with the present invention, a control device 50 is provided which is capable of determining mass airflow in the conduit 12.

The control device 50 which is arranged to conduct the method of the invention includes a control unit 52 which preferably comprises a microprocessor, a read only memory (ROM) 51 storing various operating steps and a transfer matrix, and a random-access memory (RAM) 54 used by the control unit 52 to store and retrieve data.

It is to be noted that the transfer matrix is determined in advance experimentally by means of tests using a dedicated or an appropriate test bench test bench, e.g. an engine test bench, or by means of simulation, and stored in the ROM 51.

One possible method for determining the transfer matrix will be described below.

In this embodiment, the control device 50 regulates engine operations based on several inputs, in particular the pressure signals (or values) measured by the pressure sensors 21, 22 located at two distinct points A and B respectively of the conduit 12.

The pressure sensors 21, 22 are located near the intake valve 13 and are less than 100 mm apart, the internal diameter of the conduit 12 being 30 mm in this example.

The control unit 52 is thus arranged to receive inputs (i.e. measured values of the pressure) from the pressure sensors 21, 22 via the input/output (I/O) port 53.

As will be discussed in further detail below, by employing the stored calculation steps, the stored transfer matrix, and the two pressure signals (inputs), the control unit 52 is capable of determining air mass flow at any of the points A and B of the conduit 12.

A precise value of the mass flow in the conduit 12 is consequently provided in real-time by the control unit 52.

The value(s) of the determined mass flow can then be used as control signals for actuators of the internal combustion engine, or also for diagnosis purposes.

In other words, the control unit 52 processes the pressure signals according to the method of the invention, whose steps will be described below, in order to obtain mass flow signals which may be used to generate at least one command signal based thereon.

For instance, the control device 50 may provide an output signal via the input/output port (I/O) 53 to control accurately the opening of the intake valves (intake valve timing), and thus improving volumetric effiency. Furthermore the knowledge of the instantaneous airflow allows to maintain a desired air-fuel ratio which is important to achieve optimal engine performance, fuel economy, and engine emissions.

In other words, taking into account the unsteady behavior of the pressure and mass flow, the opening of the intake valve may be timed to feed more air into the cylinder.

In this embodiment, the pressure sensors 21, 22 are located near the intake valve 13 to control the mass air flow entering the corresponding cylinder.

In other embodiments, the pressure sensors 21, 22 could be located at some other locations in the air circuit of the motor vehicle, near the air filter for instance. They could also be located upstream of the turbocharger for diagnosis purpose for instance.

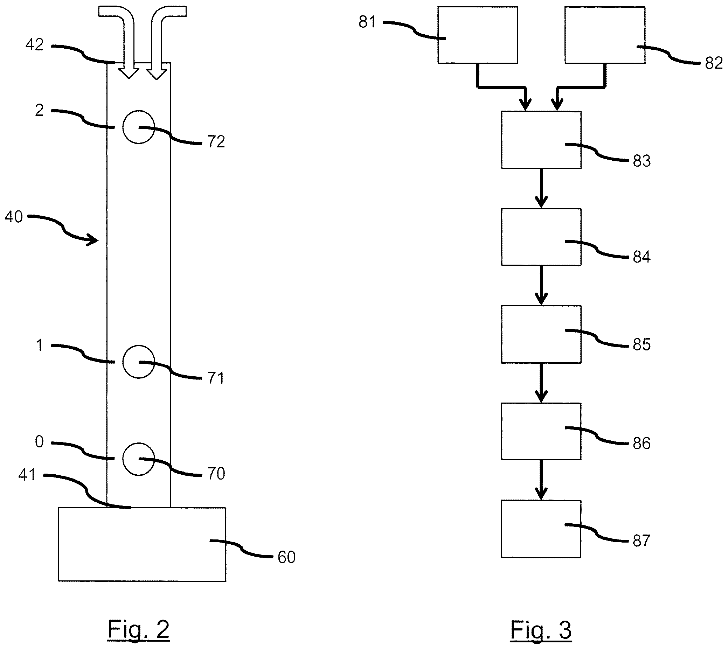

In relation to Figure 3, an explanation now follows describing the steps for determining the unsteady mass flow at points A and B of the conduit 12.

The real-time measurement device of the invention, called mass flow meter, comprises two sensors 21, 22 mounted flush against the walls of the conduit 12, the sensors 21, 22 providing two measurements of static pressure at points A and B respectively (steps 81 and 82).

The mass flow meter comprises the control device 50. The control unit 52 comprises signal processing means which process time domain information of the two pressure measurements by accessing their respective frequency spectrum (step 83), and means for calculating the instantaneous mass flow at points A and B (step 85) using linear equations relating the frequency spectrum of the mass flows to that of the measured pressures (step 84), the linear equations being derived from a calibration or transfer matrix obtained in advance (as mentioned previously).

Any of the mass flow signals may be processed (step 86) to generate at least one command signal (step 87) based thereon.

We consider that $p_A$, $p_B$, $qm_A$ and $qm_B$ are respectively the pressure and mass flows in the time domain at points A and B, and that $P_A$, $P_B$, $Qm_A$ and $Qm_B$ are respectively the spectrum of pressures and mass flows in the frequency domain at points A and B.

The one-dimensional plane wave theory with standing wave action flows allows to linearize the pressure and mass flow variables in the frequency domain and design transfer matrices having as coefficients U, V, W and X linking the information upstream (point A) to that downstream (point B).

Such a transfer matrix is calculated and calibrated in advance for the pipe section between points A and B, in such a way to have :

$$Qm_A = U \times P_A + V \times P_B$$

$$Qm_B = W \times P_A + X \times P_B$$

An appropriate signal processing allows retrieving time series data of mass flow in the time domain $qm_A$ .

In other words, the two pressure sensors 21, 22 are used to measure the pressure at two distinct points A and B of the pipe or conduit 12, and then the two measurements are used to calculate the mass flow at any of the measurement points A and B.

The dynamic mass flow rate, i.e. the fluctuating mass flow around a certain mean value is calculated using the pressure signals. Also, unlike the prior art teachings, it is not required to calculate the pressure difference between the points A and B.

The pressure signals are transposed to the frequency domain (step 84) using a Fast Fourier Transform (FFT).

The mass flow time domain values are obtained from the mass flow spectrum with an inverse Fast Fourier Transform (step 85)

The device being designed to predict a mass flow for an engine and the signals being generally low frequency signals between 30 Hz and 200 Hz for fast running engines, the frequency range used is chosen between 0 and 1000 Hz.

Unlike the known solutions that measure the mean value of the mass flow, the solution of the invention measures the dynamic part of the mass flow, i.e. concentrates on the dynamic part using linear equations as above.

The solution of the invention is non-intrusive since the pressure sensors 21, 22 are mounted flush within the conduit 12 and does not change the geometry (cross-section or length) of the conduit.

It is simple and fast to implement once the transfer matrix is known.

It may be used for any engine configuration and engine speed.

It is to be noted that the accurancy of the measurements depends on the sample frequency of the pressure sensors 21, 22.

With respect to Figure 2, an explanation now follows describing the method used to obtain the transfer matrix coefficients U, V, W and X.

It comprises of an introduction to the different measurement techniques and how they are used to find the transfer matrix poles along with modeling theory explanation.

The coefficients U, V, W and X are calculated for a given tube geometry and are obtained after pressure measurements on a dynamic flow bench. These coefficients are a mix of gas dynamics, linear acoustic plane wave theory, signal processing and calibration.

Each coefficient is measured for a given tube geometry (95 mm of length and 30 mm of internal diameter for instance).

i) When the gas dynamics equations are linearized, their solutions for pressure and mass flow take the form of harmonic variables. These can be written in transfer matrix form where the upstream pressure and mass flow are linked to the downstream variables via the transfer matrix expression. This is often done in the frequency domain because of the relative ease to transcript the harmonic solution into the frequency domain using a Fast Fourier Transform (FFT).

There exists a number of experimental apparatuses that allow for transfer matrix measurement. This is normally done using acoustic linear theory.

In the case of this invention, the inventors used the so-called "shock tube" technique, or the "dynamic flow bench".

The "shock tube" technique is a technique where a tube is rigidly closed at one end and where an elastic membrane plugs the open end. The tube is connected to a vacuum pump. Once the desired level of vacuum is reached inside the tube, the elastic membrane is pierced and a shock wave propagates inside the tube. This causes important perturbations in pressure and mass flow. The pressure oscillations are recorded using pressure sensors.

The inventors used another measurement technique implementing a device called a dynamic flow bench.

The following paragraphs describe the measurement method on the dynamic flow bench and post-treatment procedures.

ii) The dynamic flow bench is an experimental bench used by the inventors. It is a unique system that is used to measure pressure response inside a given part after a mass flow excitation.

First, the part to be tested in mounted on the bench. This part can be any intake element, from simple pipes to elaborate intake systems (manifold, runners and pipes...). In the present case, it is a simple tube 40 which is represented schematically on the dynamic flow bench 60 in Figure 2.

The dynamic flow bench principle is to first create a steady mass flow inside the tube 40. This is done using a Superflow (registered trademark) industrial pump, air being aspirated at the upper open end 42 of the tube 40.

Once the flow is stabilized, i.e. the pressure drop is constant, the mass flow is extinguished abruptly. This is done in approximately 0.5 ms using a hydraulic actuator that closes a guillotine located at the lower end 41 of the tube 40 and restricts the passage of the air. For example, the mass flow is extinguished from an initial value of 150 kg/h to zero in 0.5 ms.

The bench 60 itself is equipped with a steady air mass sensor that enables the measurement of the initial desired mass flow, and the hydraulic guillotine is controlled via a computer interface.

In this example, the mounted part is a simple tube 40 having an overall length of 252.5 mm and an internal diameter of 30 mm. This tube 40 is equipped with three pressure sensors 70, 71, 72 located at three distinct locations 0, 1 and 2 respectively of the tube 40 as shown in Figure 2.

The distance between the lower end 41 of the tube 40 and points 0, 1 and 2 is 45 mm, 112,5 mm and 207,5 mm respectively.

It is the specificity of the excitation nature on the bench, coupled with gas dynamics and acoustic linear theory that will allow, as it will be explained later on, to calculate a transfer matrix between pressure and mass flow at points 1 and 2.

This transfer matrix is then used on an engine to calculate the instantaneous mass flow using a pair of pressure sensors, according to the method described previously.

An initial mass flow $qm_e$, called the excitation mass flow, is aspirated (as illustrated by the arrows) through the upper open end 42 of tube 40 of figure 3. Once this excitation mass flow is extinguished in 0.5 ms (once the guillotine is activated), it will create a pressure response inside the tube 40. The pressure wave that was created will reflect off the walls of the guillotine closing the lower end 41 and travel back to the open end 42. At the opened end 42 of the pipe 40, it will reflect back into the tube 40 as so on and so forth until the wave action inside the tube 40 dies out. The oscillation of this air mass causes pressure and mass flow fluctuations inside the tube 40. The pressure fluctuations are directly measured using the pressure sensors 70, 71, 72. This is done with a sampling frequency that can range from 20 KHz to 100 KHz. The entire oscillation event only lasts for 0.25 seconds before dying out.

iii) We now describe the modeling based on gas dynamics theory, acoustics and signal processing.

Following the mass flow excitation on the dynamic flow bench and the registration of the different pressure signals, the measurements are fed to a specially developed Matlab (**registered trademark**) routine that will calculate the transfer matrix between points 1 and 2. The steps below detail the procedure.

a) The flow inside the piping of an internal combustion engine (and inside the pipe on the dynamic bench) is considered with the one-dimensional plane wave theory. Therefore, a second order differential equation can be written in terms of pressure at point 0 of the tube 40 and different parameters with the excitation mass flow $qm_e$ as a source term. These parameters are :

- Frequency: equal to the frequency of oscillation of the pressure and mass flow fluctuations on the dynamic flow bench 60 ;
- Inertial parameter : sets the available energy for the waves after the guillotine closes ;

- Damping parameter: characterizes losses and friction effects that eventually lead the pressure and mass flow oscillations to die out.

b) When the second order differential equation is transposed into the frequency domain using a Laplace transform, these parameters can be identified. Practically this is done by accessing the frequency domain of the measured pressure at point 0 of the tube 40. This is done using a Fast Fourier Transform (FFT) algorithm with dedicated signal processing tools conceived for carrying out the task (filters, dynamic component only considered, proper windowing to eliminate high frequency noise...).

Once the parameters are known, a transfer function is established between the dynamic pressure oscillations at point 0 and the excitation mass flow $qm_e$ on the bench.

The transfer function is called PFo :

$$PF_0 = \frac{P0}{Qme}$$

Po is the pressure at point 0 in the frequency domain : Po=FFT(po(t)) where t is the time in seconds.

$Qm_e$ is the excitation mass flow in the frequency domain :

$$Qm_e = FFT(qm_e(t))$$

The transfer function PFo is used to find the matrix between points 1 and 2.

c) As stated before, after the guillotine closes the lower end 41, the fluctuations inside the tube 40 start to take place on the dynamic flow bench.

However they take place according to a very specific harmonic resonance. Acoustic theory predicts that the pressure and mass flow inside the tube 40 fluctuate according to the quarter wave length frequency of the tube 40. If the length of the tube 40 is $L$, then according to acoustic linear theory the frequencies of pressure and mass flow are given by :

$$f_i = \frac{c0}{4L}(2i\text{-}1)$$

where co is the local speed of sound and i is the harmonic number.

The fluctuations take place with a multitude of resonant frequencies, each one being a multiple of (2i-1). This very specific resonance mode is known as quarter wave length resonance and is characteristic of a tube that is rigidly closed at one end and opened at the other, much like the tube 40 on the dynamic bench 60 after excitation.

This resonance profile states that the pressure fluctuations have a maximum level at the closed end and a minimum level at the opened end and vice-versa for the mass flow fluctuations. Consequently, the theoretical pressure and mass flow distribution inside the tube 40 on the bench 60 is known.

When this known pressure profile is combined with the pressure measurements at points 1 and 2 and with the transfer function PFo , four additional transfer functions can be calculated from $PF_0$:

$PF_1$ is the transfer function linking dynamic pressure at point 1 to the excitation mass flow :

$$PF_1 = \frac{P1}{Qme}$$

$PF_2$ is the transfer function linking dynamic pressure at point 2 to the excitation mass flow :

$$PF_2 = \frac{P2}{Qme}$$

$QF_1$ is the transfer function linking dynamic mass flow at point 1 to the excitation mass flow :

$$QF_1 = \frac{Qm1}{Qme}$$

$QF_2$ is the transfer function linking dynamic mass flow at point 2 to the excitation mass flow :

$$QF_2 = \frac{Qm2}{Qme}$$

d) The four transfer functions are now known. They link dynamic pressure and mass flow components in the frequency domain to the excitation mass flow on the dynamic flow bench 60.

This transfer function technique is often used in electronics and automatic studies to characterize any given system using its response to an impulse excitation. The system in this case consists of an air mass trapped inside the tube.

The transfer functions are important to be characterized because they represent a model that will be now used to obtain the transfer matrix.

e) Albeit the impulse excitation on the dynamic flow bench 60 enables an excellent characterization of the tube 40, it cannot be reproduced a multitude of times. It resembles one very rapid closing of the intake valve on an engine.

However, in an engine, the intake valves open and close many times and create a standing wave action inside the intake system.

As stated before, the pressure response on the dynamic bench 60 lasts only 0.25 sec, whereas on an actual engine it lasts as long as the engine is running. Using the four transfer functions and Simulink (registered trademark), an artificial excitation that is long lasting and that covers a broad frequency range is artificially created and used as an input excitation to the four transfer functions.

These transfer functions will then output computed values for pressure and mass flow.

Let Pis, $P_{2s}$, $Qm_{1s}$ and $Qm_{2s}$ be the respective output values of the four transfer functions after excitation in the Simulink routine.

f) Now the transfer matrix can be calculated. The transfer matrix theory states that pressure and mass flow for a given geometry are linked together in the frequency domain. The transfer matrix is written as :

$$\begin{pmatrix} P2 \\ Qm2 \end{pmatrix} = \begin{bmatrix} A & B \\ C & D \end{bmatrix} \begin{pmatrix} P1 \\ Qm1 \end{pmatrix}$$

The simple tube is considered to be symmetrical and reversible. Therefore, the transfer matrix terms verify the following conditions :

$$AD-BC=-1 \text{ and } A=D$$

Solving the systems of four equations, the four unknown terms A, B, C and D can be calculated. Practically, they represent a frequency domain vector.

The transfer matrix can also be written in a way to give mass flow as a function of pressure. By re-arranging terms, one could write :

$$\begin{pmatrix} Qm1 \\ Qm2 \end{pmatrix} = \begin{bmatrix} U & V \\ W & X \end{bmatrix} \begin{pmatrix} P1 \\ P2 \end{pmatrix}$$

iv) We now describe the use of the transfer matrix to measure instantaneous mass flow in an engine.

The transfer matrix gives the mass flow dynamic component as a function of pressure at points 1 and 2.

In the example of Figure 2, the geometry between these two points 1 and 2 is a tube having an internal diameter of 30 mm and a length of 95 mm.

Theory states that the transfer matrix is independent of the upstream and downstream conditions and that it is linear in nature.

This means that the identified transfer matrix on the dynamic flow bench 60 can be used to measure information on an actual engine.

A tube with a 30 mm cross section diameter with two pressure sensors distant 95mm from each other can be installed anywhere on the engine intake and the pressure information can be used to measure instantaneous dynamic mass flow.

For example, the mass flow in the frequency domain at point 1 is given by

$$Q_{m1}=U \times P_1 + V \times P_2$$

The mass flow traces or actual time domain values are obtained with an inverse Fast Fourier Transform :

$$qm_1(t)=IFFT(Qm_1)$$

In summary, the proposed device for mass flow measurements requires no tuning or calibration.

Once the transfer matrix is known, it can be used anywhere in the intake line on any engine configuration.

The device employs a transfer matrix technique in the frequency domain and bridges the gap between the limitation of the frequency domain acoustic theory and the time domain analysis.

The device links pressure and mass flow directly and implicitly takes into account air density fluctuations and temperature effects.

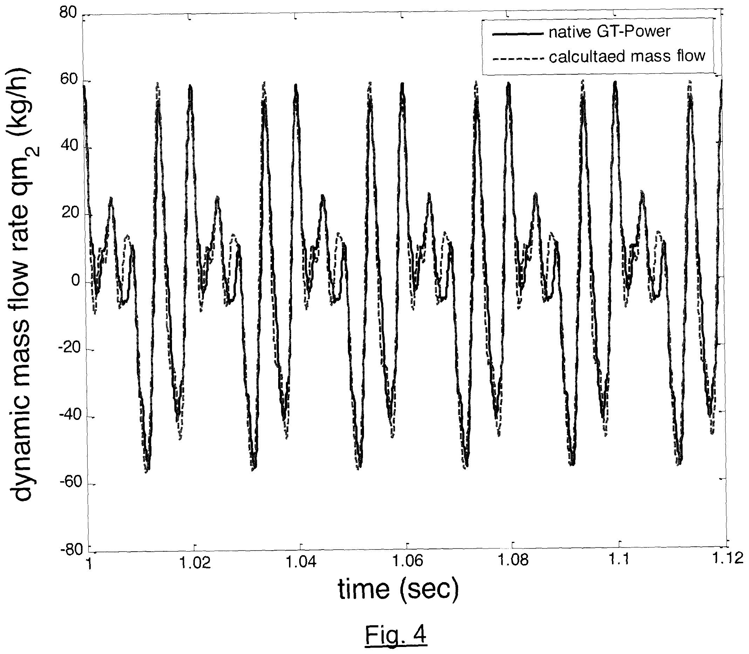

Such a solution was validated by simulation as shown in Figure 4.

The dotted line represents the dynamic mass flow rate $qm_2$ calculated according to the method of the present invention, the continous line representing the dynamic mass flow rate $qm_2$ obtained by using the GT-Power (registered Trademark) simulation tool.

It appears clearly that the values of the dynamic mass flow rate $qm_2$ calculated according to the method of the present invention are accurate and that such a method is reliable.

**Claims**

1.   A method for determining the instantaneous mass flow of a gas, such as air, in an air intake channel (12) of an internal combustion engine of a motor vehicle, said method comprising the steps of:

       - measuring (81) a time-domain signal of gas pressure at a first measurement point (A) of said intake air channel (12);
       - measuring (82) a time-domain signal of gas pressure at a second measurement point (B) of said intake air channel (12),
       - obtaining (83) for each of the measured time-domain signals of gas pressure the corresponding frequency spectrum **characterised in that** said method further comprises the steps of:

- obtaining (84) the frequency spectrum of the mass flow at each of said measurement points (A, B) using a model in the frequency domain linking the frequency spectrum of the measured gas pressure at said measurement points (A, B) to the frequency spectrum of the mass flow at said measurement points (A, B), wherein said model is a transfer matrix;
- obtaining (85) the time-domain signal of the mass flow rate at any measurement point (A, B) from the frequency spectrum of the mass flow at said corresponding measurement point (A, B).

2. A method according to claim 1, **characterised in that** the step of obtaining (84) the frequency spectrum of the mass flow at each of said measurement points (A, B) consists in solving a frequency-domain linear equation determined from said model.

3. A method according to claim 1 or 2, **characterised in that** said transfer matrix is derived experimentally by measuring pressure response inside a given conduit after a mass flow excitation.

4. A method according to any one of claims 1 to 3, **characterised in that** it further comprises the steps of developing (86) an engine control command as a function of the computed time-domain signal of the mass flow rate at any measurement point (A, B) and controlling (87) engine operation in accordance with the developed control command (86).

5. A method according to any one of claims 1 to 4, **characterised in that** the frequency spectrum of each of the measured pressure signals is obtained using a Fast Fourier Transform.

6. A method according to any one of claims 1 to 5, **characterised in that** the time-domain signal of the mass flow rate at any measurement point (A, B) is obtained using an inverse Fast Fourier Transform.

7. Device for determining the instantaneous mass flow of a gas, such as air, in an air intake channel (12) of an internal combustion engine of a motor vehicle, said device comprising:

- means for measuring (21) a time-domain signal of gas pressure at a first measurement point (A) of said air intake channel (12);
- means for measuring (22) a time-domain signal of gas pressure at a second measurement point (B) of said air intake channel (12),
- means for obtaining (50) for each of the measured time-domain signals of gas pressure the corresponding frequency spectrum

**characterised in that** said method further comprises the steps of:

- means for obtaining (50) the frequency spectrum of the mass flow at each of said measurement points (A, B) using a model in the frequency domain linking the frequency spectrum of the measured gas pressure at said measurement points (A, B) to the frequency spectrum of the mass flow at said measurement points (A, B), wherein said model is a transfer matrix;
- means for obtaining (50) the time-domain signal of the mass flow rate at any measurement point (A, B) from the frequency spectrum of the mass flow at said corresponding measurement point (A, B).

8. Device according to claim 7, **characterised in that** comprises means (50) for developing (50) an engine control command as a function of the computed time-domain signal of the mass flow rate at any measurement point (A, B) and means for controlling engine operation in accordance with the developed control command.

9. Device according to claim 7 or 8, **characterised in that** the means for measuring (21, 22) the time-domain signals of the gas pressure at said measurement points comprises two pressure sensors (21, 22) flush-mounted within the conduit (12).

10. A computer program recorded on a computer-readable medium and capable of being run by a processor, **characterised in that** the program includes program code instructions for implementing the method according to any one of claims 1 to 6 in a device according to any one of claims 7 to 9.

**Patentansprüche**

1. Verfahren zum Ermitteln des verzögerungsfreien Massenstroms eines Gases, wie zum Beispiel Luft, in einem Luftansaugkanal (12) einer Kraftfahrzeugbrennkraftmaschine, das Verfahren umfassend die Schritte:

- Messen (81) eines Zeitbereichssignals des Gasdrucks an einem ersten Messpunkt (A) des Luftansaugkanals (12);
- Messen (82) eines Zeitbereichssignals des Gasdrucks an einem zweiten Messpunkt (B) des Luftansaugkanals (12);
- Erzeugung (83) für jedes der gemessenen Zeitbereichssignale des Gasdrucks das entsprechende Frequenzspektrum;

**dadurch gekennzeichnet, dass** das Verfahren ferner umfasst die Schritte:

- Erzeugung (84) des Frequenzspektrums des Massenstroms an jedem der Messpunkte (A, B) unter Verwendung eines Modells in dem Frequenzbereich, welcher das Frequenzspektrum des gemessenen Gasdrucks an den Messpunkten (A, B) mit dem Frequenzspektrum des Massenstroms an den Messpunkten (A, B) verknüpft, wobei das Modell eine Transfermatrix ist;
- Erzeugung (85) des Zeitbereichssignals des Massendurchsatzes an einem beliebigen Messpunkt (A, B) aus dem Frequenzspektrum des Massenstroms an dem entsprechenden Messpunkt (A, B).

2. Verfahren nach Anspruch 1, **dadurch gekennzeichnet, dass** der Schritt zur Erzeugung (84) des Frequenzspektrums des Massenstroms an jedem der Messpunkte (A, B) darin besteht, eine von dem Modell ermittelte lineare Gleichung im Frequenzbereich zu lösen.

3. Verfahren nach Anspruch 1 oder 2, **dadurch gekennzeichnet, dass** die Transfermatrix experimentell durch Messen des Druckverhaltens innerhalb einer gegebenen Leitung nach einer Massenstromanregung abgeleitet wird.

4. Verfahren nach einem der Ansprüche 1 bis 3, **dadurch gekennzeichnet, dass** es ferner die Schritte zur Erzeugung (86) eines Motorsteuerungsbefehls als eine Funktion des berechneten Zeitbereichssignals des Massendurchsatzes an einem beliebigen Messpunkt (A, B) und zur Regelung (87) des Motorbetriebs in Übereinstimmung mit dem entwickelten Steuerbefehl (86) umfasst.

5. Verfahren nach einem der Ansprüche 1 bis 4, **dadurch gekennzeichnet, dass** das Frequenzspektrum von jedem der gemessenen Drucksignale durch Verwendung einer Schnellen Fourier-Transformation erzeugt wird.

6. Verfahren nach einem der Ansprüche 1 bis 5, **dadurch gekennzeichnet, dass** das Zeitbereichssignal des Massendurchsatzes an einem beliebigen Messpunkt (A, B) durch Verwendung einer inversen Schnellen Fourier-Transformation erzeugt wird.

7. Vorrichtung zum Ermitteln des verzögerungsfreien Massenstroms eines Gases, wie zum Beispiel Luft, in einem Luftansaugkanal (12) einer Kraftfahrzeugbrennkraftmaschine, die Vorrichtung umfassend:

- Mittel zum Messen (21) eines Zeitbereichssignals des Gasdrucks an einem ersten Messpunkt (A) des Luftansaugkanals (12);

- Mittel zum Messen (22) eines Zeitbereichssignals des Gasdrucks an einem zweiten Messpunkt (B) des Luftansaugkanals (12);
- Mittel zur Erzeugung (50) für jedes der gemessenen Zeitbereichssignale des Gasdrucks das entsprechende Frequenzspektrum;

**dadurch gekennzeichnet, dass** das Verfahren ferner umfasst die Schritte:

- Mittel zur Erzeugung (50) des Frequenzspektrums des Massenstroms an jedem der Messpunkte (A, B) unter Verwendung eines Modells in dem Frequenzbereich, welcher das Frequenzspektrum des gemessenen Gasdrucks an den Messpunkten (A, B) mit dem Frequenzspektrum des Massenstroms an den Messpunkten (A, B) verknüpft, wobei das Modell eine Transfermatrix ist;
- Mittel zur Erzeugung (50) des Zeitbereichssignals des Massendurchsatzes an einem beliebigen Messpunkt (A, B) aus dem Frequenzspektrum des Massenstroms an dem entsprechenden Messpunkt (A, B).

8. Vorrichtung nach Anspruch 7, **dadurch gekennzeichnet, dass** sie Mittel (50) zur Erzeugung (50) eines Motorsteuerungsbefehls als eine Funktion des berechneten Zeitbereichssignals des Massendurchsatzes an einem beliebigen Messpunkt (A, B) und Mittel zur Regelung des Motorbetriebs in Übereinstimmung mit dem entwickelten Steuerbefehl umfasst.

9. Vorrichtung nach Anspruch 7 oder 8, **dadurch gekennzeichnet, dass** die Mittel zum Messen (21, 22) der Zeitbereichssignale des Gasdrucks an den Messpunkten zwei Drucksensoren (21, 22) umfassen, die in dem Kanal (12) oberflächenbündig montiert sind.

10. Computerprogramm, das auf einem computerlesbaren Medium aufgezeichnet ist und von einem Prozessor ausgeführt werden kann, **dadurch gekennzeichnet, dass** das Programm Programmcode-Anweisungen beinhaltet, um das Verfahren nach einem der Ansprüche 1 bis 6 in einer Vorrichtung nach einem der Ansprüche 7 bis 9 zu implementieren.

**Revendications**

1. Procédé pour déterminer le flux massique instantané d'un gaz, tel que de l'air, dans un canal d'admission d'air (12) d'un moteur à combustion interne d'un véhicule automobile, ledit procédé comprenant les étapes :

- mesurer (81) un signal de domaine temporel d'une pression de gaz à un premier point de mesure (A) dudit canal d'admission d'air (12) ;
- mesurer (82) un signal de domaine temporel d'une pression de gaz à un second point de mesure (B) dudit canal d'admission d'air (12) ;
- obtenir (83) pour chaque signal de domaine temporel d'une pression de gaz le spectre des fréquences correspondant ;

**caractérisé en ce que** ledit procédé comprenant en outre les étapes pour :

- obtenir (84) le spectre des fréquences du flux massique à chacun desdits points de mesure (A, B) en utilisant un modèle dans le domaine des fréquences connectant le spectre des fréquences de la pression de gaz mesurée auxdits points de mesure (A, B) au spectre des fréquences du flux massique auxdits points de mesure (A, B), dans lequel ledit modèle est une matrice de transfert ;
- obtenir (85) le signal de domaine temporel du débit massique à n'importe quel point de mesure (A, B) à partir du spectre des fréquences du flux massique audit point de mesure correspondant (A, B).

2. Procédé selon la revendication 1, **caractérisé en ce que** l'étape pour obtenir (84) le spectre des fréquences du flux massique à chacun desdits points de mesure (A, B) consiste à résoudre une équation linéaire dans le domaine des fréquences déterminée à partir dudit modèle.

3. Procédé selon la revendication 1 ou 2, **caractérisé en ce que** ladite matrice de transfert est dérivée expérimentalement en mesurant la réponse de pression à l'intérieur d'un conduit donné après une excitation du flux massique.

4. Procédé selon l'une quelconque des revendications 1 à 3, **caractérisé en ce qu'**il comprend en outre les étapes pour développer (86) une commande de contrôle du moteur en tant que fonction du signal de domaine temporel calculé du débit massique à n'importe quel point de mesure (A, B) et pour contrôler (87) le fonctionnement du moteur conformément à la commande de contrôle développée (86).

5. Procédé selon l'une quelconque des revendications 1 à 4, **caractérisé en ce que** le spectre des fréquences de chacun des signaux de pression mesurés est obtenu en utilisant la Transformation de Fourier Rapide.

6. Procédé selon l'une quelconque des revendications 1 à 5, **caractérisé en ce que** le signal de domaine temporel du débit massique à n'importe quel point de mesure (A, B) est obtenu en utilisant la Transformation de Fourier Rapide inverse.

7. Dispositif pour déterminer le flux massique instantané d'un gaz, tel que de l'air, dans un canal d'admission d'air (12) d'un moteur à combustion interne d'un véhicule automobile, ledit dispositif comprenant :

- moyens pour mesurer (21) un signal de domaine temporel d'une pression de gaz à un premier point de mesure (A) dudit canal d'admission d'air (12) ;
- moyens pour mesurer (22) un signal de domaine temporel d'une pression de gaz à un second point de mesure (B) dudit canal d'admission d'air (12) ;
- moyens pour obtenir (50) pour chaque signal de domaine temporel d'une pression de gaz le spectre des fréquences correspondant ;

**caractérisé en ce que** ledit procédé comprenant en outre les étapes pour :

- moyens pour obtenir (50) le spectre des fréquences du flux massique à chacun des points de mesure (A, B) en utilisant un modèle dans le domaine des fréquences connectant le spectre des fréquences de la pression de gaz mesurée auxdits points de mesure (A, B) au spectre des fréquences du flux massique auxdits points de mesure (A, B), dans lequel ledit modèle est une matrice de transfert ;
- moyens pour obtenir (50) le signal de domaine temporel du débit massique à n'importe quel point de mesure (A, B) à partir du spectre des fréquences du flux massique audit point de mesure correspondant (A, B).

8. Dispositif selon la revendication 7, **caractérisé en ce qu'**il comprend des moyens (50) pour développer (50) une commande de contrôle du moteur en tant que fonction du signal de domaine temporel calculé du débit massique à n'importe quel point de mesure (A, B) et des moyens pour contrôler le fonctionnement du moteur conformément à la commande de contrôle développée.

9. Dispositif selon la revendication 7 ou 8, **caractérisé en ce que** les moyens pour mesurer (21, 22) les signaux de domaine temporel de la pression de gaz auxdits points de mesure comprennent deux capteurs de pression (21, 22) encastrés à l'intérieur du conduit (12).

10. Programme informatique enregistré sur un support lisible par ordinateur et en mesure d'être exécuté par un processeur, **caractérisé en ce que** le programme inclut des instructions de code de programme pour mettre en œuvre le procédé selon l'une quelconque des revendications 1 à 6 dans un dispositif selon l'une quelconque des revendications 7 à 9.

Fig. 1

EP 2 927 465 B1

Fig. 2

Fig. 3

EP 2 927 465 B1

14

Fig. 4

EP 2 927 465 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2009053380 W
- WO 2009118290 A
- WO 2013002656 A1
- WO 2006133963 A1